# EUROPÄISCHE PATENTANMELDUNG

(11) **EP 4 495 525 A1**
(43) Veröffentlichungstag der Anmeldung: **22.01.2025**
(21) Anmeldenummer: 23186949.6
(22) Anmeldetag: 21.07.2023
(51) Int. Cl.: F26B 3/06, B29B 13/06, B29C 45/72, F26B 17/14, F26B 23/00

(54) **VORRICHTUNG ZUR TROCKNUNG VON KUNSTSTOFFGRANULAT**

(71) Anmelder: Wenz Kunststoff GmbH & Co. KG, 58511 Lüdenscheid (DE)
(72) Erfinder: Weller, Karsten, 58511 Lüdenscheid (DE)
(74) Vertreter: Patentanwälte Dörner & Kötter PartG mbB

(57) **Zusammenfassung**

Die Erfindung betrifft eine Vorrichtung zur Trocknung von Kunststoffgranulat, umfassend einen Trocknungsbehälter (1), der endseitig eine Entnahmeöffnung (13) aufweist und wenigstens einen Gasleitkanal (2, 3), der mit einer Trocknungsgasquelle verbunden ist, wobei Mittel zur Erwärmung wenigstens eines Trocknungsgasstroms angeordnet sind, wobei die Mittel zur Erwärmung des wenigstens einen Trocknungsgases wenigstens eine Wärmepumpe (4) umfassen.

## Beschreibung

Die Erfindung betrifft eine Vorrichtung zur Trocknung von Kunststoffgranulat nach dem Oberbegriff des Patentanspruchs 1.

Vor der Verarbeitung von Kunststoffgranulat ist es zwingend erforderlich, dieses zu trocknen. Dieses betrifft insbesondere hygroskopische Kunststoffe, wie beispielsweise PA oder PBT, welche Wassermoleküle vergleichbar einem Schwamm speichern. Durch Feuchtigkeit des eingesetzten Kunststoffgranulates werden minderwertige Formteile verursacht, welche den gestellten Anforderungen nicht entsprechen. Typische Fehlerbilder reichen von den so genannten Feuchtigkeitsschlieren bis hin zu einem Molekularkettenabbau mit entsprechendem Festigkeitsverlust.

Zum Trocknen von Kunststoffgranulaten kommen unterschiedliche Trocknungsverfahren zum Einsatz. Bei Trockenlufttrocknern erfolgt die Trockenlufterzeugung in einer Luft-Trockenpatrone im Trockner. Die zu entfeuchtende Luft wird in der Trockenpatrone an einem so genannten Molekularsieb vorbeigeströmt, welches das in der Luft enthaltene Wasser aufnimmt. Das Molekularsieb besteht aus einem porösen Granulat (beispielsweise einem Silikatgel), welches eine hohe Aufnahmefähigkeit von Wasser besitzt. Ein solcher Adsorbtionstrockner ist beispielsweise in der DE 20 2017 107 185 U1 beschrieben. Hierbei ist ein Trocknungsbehälter angeordnet, der das zu trocknende Kunststoffgranulat enthält und der einen oberen zylindrischen Teil aufweist, an den sich ein unterer trichterförmiger Teil anschließt. Die Trocknungsluft wird über einen mittig in den Trocknungsbehälter angeordneten Diffusorkegel dem Kunststoffgranulat zugeführt. Dieses sogenannte Adsorbtionsverfahren erweist sich als sehr energieintensiv, da zur jeweils erforderlichen Reaktivierung des Molekularsiebes eine Erhitzung auf 250°C bis 350°C erforderlich ist.

Aufgrund des einfachen Aufbaus werden zur Trocknung von Kunststoffgranulat unter anderem auch Drucklufttrockner eingesetzt. Dabei wird an einen regelmäßig vorhandenen Druckluftanschluss ein Ventil zur Druck- und Durchflussmengenreduzierung angeschlossen, an das sich eine Prozessheizung anschließt, welche Luft auf Trocknungstemperatur erwärmt, bevor sie den Materialbehälter durchströmt. Dabei macht man sich folgenden Effekt zunutze: Mit steigendem Druck nimmt die Aufnahmefähigkeit der Luft für Wasser ab. Bei der Verdichtung von Luft wird bereits ein Großteil des Wassers abgeschieden. Wird diese verdichtete Luft auf den Umgebungsdruck entspannt, hat die entspannte Luft einen Taupunkt von ca. -25°C. Dabei ist der Taupunkt die Temperatur, bei der die in der Luft gebundene Feuchtigkeit an einem Objekt kondensiert. Je niedriger der Taupunkt der Luft, desto höher ist ihre Wasseraufnahmekapazität. Auch dieser Aufbau erweist sich durch die Bereitstellung der Druckluft bzw. Pressluft sowie auch der Betrieb der Prozessheizung als sehr energieintensiv.

Zur Minimierung des Energiebedarfs dieser Vorrichtung wird in der EP 2 399 718 A1 vorgeschlagen, der Trocknungsluft eine bestimmte Menge an Umgebungsluft beizumengen, wodurch die erforderliche Menge an energieintensiver Pressluft minimiert ist. Die zuführbare Menge an Umgebungsluft wird mit Hilfe eines Taupunktsensors ermittelt.

Um die Effizienz der vorstehenden Vorrichtungen weiter zu verbessern, wird in der EP 3 702 710 A1 vorgeschlagen, das Trocknungsgas nicht, wie im Stand der Technik bekannt, zentral über einen Diffusorkegel, sondern vielmehr von außen nach innen durch einen zumindest bereichsweise radial umlaufend an der Behälterinnenwand angeordneten, zur Behältermittelachse hin kragenden Gasleitkanal einzubringen. Durch die Ausrichtung der Auslassöffnungen zur Entnahmeöffnung hin wird das Trocknungsgas, vorzugsweise vorgewärmte entspannte Pressluft oder durch einen Adsorbtionstrockner getrocknete Luft, umlaufend von außen nach innen in den unteren Bereich des in dem Behälter befindlichen Kunststoffgranulats eingebracht, von wo es langsam flächig durch das Granulat nach oben steigt und hierbei über einen längeren Zeitraum Feuchtigkeit von den Granulatpartikeln aufnimmt, die es umströmt, wodurch eine erhöhte Feuchtigkeitsabführung aus dem Granulat erzielt ist.

Die vorstehenden Vorrichtungen zur Trocknung von Kunststoffgranulat haben sich in der Praxis bewährt. Vor dem Hintergrund des immer noch erheblichen Energiebedarfs der vorbekannten Trocknungsvorrichtungen liegt der Erfindung die Aufgabe zugrunde, die Effizienz solcher Trocknungsvorrichtungen weiter erhöhen. Gemäß der Erfindung wird diese Aufgabe durch eine Vorrichtung mit den Merkmalen des Patentanspruchs 1 gelöst.

Mit der Erfindung ist eine Vorrichtung zur Trocknung von Kunststoffgranulat bereitgestellt, deren Effizienz weiter erhöht ist. Dadurch, dass die Mittel zur Erwärmung des wenigstens einen Trocknungsgases wenigstens eine Wärmepumpe umfassen, ist eine Nutzung der in Kunststoffspritzgießhallen prozessbedingt hohen Umgebungstemperaturen zur Minimierung der zum Aufheizen des wenigstens einen Trocknungsgasstroms erforderlichen Energie ermöglicht.

In Weiterbildung der Erfindung ist die Wärmepumpe mit einem Kühlfluidreservoir verbunden, das mit wenigstens einem Spritzgießwerkzeugkühlkreislauf verbunden ist. Die Temperierung von Spritzgießwerkzeugen erfordert eine fortlaufende energieintensive Kühlung des durch das jeweilige Spritzgießwerkzeug aufgeheizte Kühlwasser, das anschließend dem Spritzgießwerkzeug für den nächsten Kühlvorgang wieder zugeführt wird. Durch die Verbindung eines Kühlwasserreservoirs, das mit wenigstens einem Spritzgießwerkzeugkühlkreislauf verbunden ist, ist neben der Reduzierung der zum Aufheizen des wenigstens einen Trocknungsgasstroms erforderlichen Energie gleichzeitig eine Reduzierung der für die Kühlung des Kühlwassers des wenigstens einen Spritzgießwerkzeugs erzielt.

In Ausgestaltung der Erfindung ist die Wärmepumpe mit einem Kühlfluidreservoir verbunden, das mit dem Hydraulikkühlsystem wenigstens einer Kunststoffspritzgießmaschine verbunden ist. Das Hydrauliksystem einer Spritzgießmaschine wird fortwährend durch ein Kühlsystem gekühlt, um das Hydrauliköl in einem optimalen Temperaturfeld zu halten. Diese Kühlsysteme sind regelmäßig in Form von kühlwasserdurchströmten Wärmetauschern ausgebildet. Durch die Verbindung der Wärmepumpe mit dem Hydraulikkühlsystem wenigstens einer Kunststoffspritzgießmaschine wird das Temperaturniveau der Wärmepumpe weiter angehoben, wodurch deren Effizienz gesteigert ist. Zugleich ist hierdurch eine Reduzierung der für die Kühlung des Kühlwassers des Hydraulikkühlsystems erforderlichen Energie bewirkt. Das Hydraulikkühlsystem kann auch als zentrales Kühlsystem zur Hydraulik- und Werkzeugkühlung ausgeführt sein.

In weiterer Ausgestaltung der Erfindung ist wenigstens eine Wärmepumpe als Wasser-Luft-Wärmepumpe ausgebildet. Hierdurch ist das durch die Wärmepumpe auf ein höheres Temperaturniveau gehobene Medium Luft, die direkt als Trocknungsgas dem Kunststoffgranulat zugeführt werden kann.

Alternativ oder zusätzlich kann auch eine Wärmepumpe als Luft-Wasser-Wärmepumpe oder als Luft-Luft-Wärmepumpe ausgebildet sein. Hierdurch wird die in Kunststoffspritzgießbetrieben regelmäßig hohe Umgebungslufttemperatur zur Reduzierung der zum Aufheizen des wenigstens einen Trocknungsgasstroms genutzt.

In Weiterbildung der Erfindung ist wenigstens einer Wärmepumpe nachgeschaltet ein vorzugsweise elektrisches Heizelement angeordnet. Hierdurch ist je nach zu trocknendem Kunststoffgranulat falls erforderlich eine zusätzliche Erwärmung des Trocknungsgases ermöglicht.

Alternativ oder zusätzlich kann die wenigstes eine Wärmepumpe mit weiteren Wärmequellen verbunden sein, wie beispielsweise Galvanikanlagen, Klimaanlagen, Kompressoren, einem Blockheizkraftwerk oder auch einem Hallenkühlsystem.

In weiterer Ausgestaltung der Erfindung ist die Trocknungsgasquelle durch eine Druckgasquelle, insbesondere eine Pressluftquelle oder durch den Trocknungsgasauslass eines Adsorbtionstrockners gebildet. Dabei ist vorzugsweise an dem Trocknungsbehälter wenigstens ein Sensor zu Erfassung der Temperatur und/oder des Taupunkts in dem Trocknungsbehälter angeordnet, wobei eine Steuer- und Regeleinrichtung zur Steuerung wenigstens eines Trocknungsgasvolumenstroms angeordnet ist, die mit dem wenigstens einen Sensor verbunden ist. Hierdurch ist eine Minimierung des zur Trocknung des Granulates erforderlichen Trocknungsgases ermöglicht, wodurch der Energiebedarf weiter gesenkt wird.

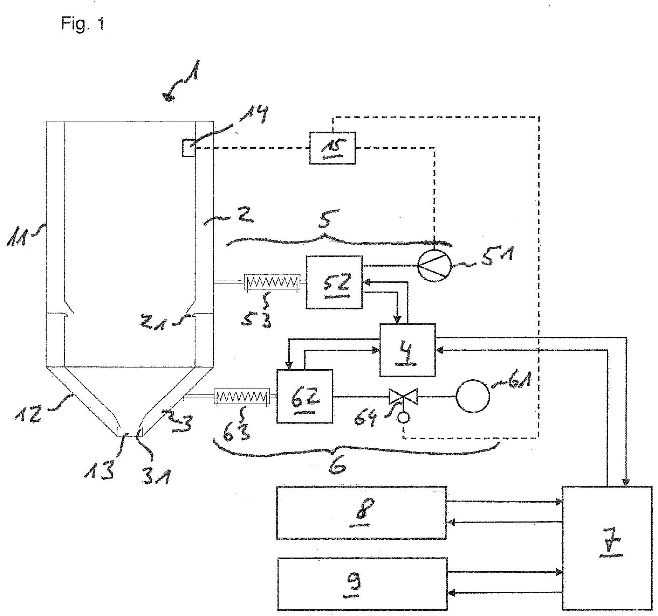

Andere Weiterbildungen und Ausgestaltungen der Erfindung sind in den übrigen Unteransprüchen angegeben. Ein Ausführungsbeispiele der Erfindung ist in deer Zeichnung dargestellt und wird nachfolgend im Einzelnen beschrieben. Die einzige Figur 1 zeigt die schematische Darstellung einer Vorrichtung zur Trocknung von Kunststoffgranulat.

Die als Ausführungsbeispiel gewählte Vorrichtung zur Trocknung von Kunststoffgranulat gemäß Figur 1 besteht im Wesentlichen aus einem Trocknungsbehälter 1, der mit zwei Trockengasquellen verbunden ist, nämlich einer Umgebungsluftquelle 5 und einer Pressluftquelle 6. Der Trocknungsbehälter 1 umfasst einen hohlzylindrischen ersten Abschnitt 11, an den sich ein trichterförmiger zweiter Abschnitt 12 anschließt, der endseitig eine Entnahmeöffnung 13 aufweist. In dem zylindrischen Abschnitt 11 ist ein erster Gasleitkanal 2 angeordnet, der einen Gasauslass 21 aufweist, der zu der Entnahmeöffnung 13 hin ausgerichtet ist.

In dem trichterförmigen zweiten Abschnitt 12 des Trocknungsbehälters 2 ist ein zweiter Gasleitkanal 3 angeordnet, der einen Gasauslass 31 aufweist, der ebenfalls in Richtung der Entnahmeöffnung gerichtet ist.

Der erste Gasleitkanal 2 ist mit der Umgebungsluftquelle 5 verbunden, die aus einem Gebläse 51, einem nachgeschalteten ersten Wärmetauscher 52 und einer diesem nachgeschalteten elektrischen Heizung 53 gebildet ist. Der zweite Gasleitkanal 3 ist mit einer Trocknungsgasquelle 6 verbunden, die aus einer Pressluftquelle 61, einem nachgeschalteten zweiten Wärmetauscher 62 und einer diesem nachgeschalteten elektrischen Heizung 63 gebildet ist mit der sie über ein Expansionsventil 64 verbunden ist.

Der erste Wärmetauscher 52 und der zweite Wärmetauscher 62 sind mit einer Wasser - Wasser - Wärmepumpe 4 verbunden, die mit einem Kühlwassertank 7 verbunden ist, aus dem sie mit erhitzen Wasser der Rücklaufleitungen des mit diesem verbundenen Spritzgießwerkzeugs 8 und des mit diesem verbundenen Kühlsystems der Spritzgießmaschine 9 gespeist ist.

An der Innenwand des Trocknungsbehälters 1 sind ein Taupunkt- und Thermosensormodul 14 angeordnet, das mit einer Steuer- und Regeleinrichtung 15 verbunden ist, die eingerichtet ist, Temperatur- und Taupunkt in dem Trocknungsbehälter 1 auf Basis der von den Sensoren des Sensormoduls 14 ermittelten Messwerte auf hinterlegte Vorgabewerte einzuregeln. Hierzu ist die Steuer- und Regeleinrichtung 15 zur Steuerung des Volumenstroms der Umgebungsluftquelle 5 mit dem Gebläse 51 und zur Steuerung des Volumenstroms der Pressluftquelle 6 mit dem Expansionsventil 64 verbunden.

Zur Trocknung von in dem Trocknungsbehälter 1 befindlichen Kunststoffgranulat wird über das Expansionsventil 64 entspannte Pressluft durch den zweiten Wärmetauscher geleitet, wo sie durch das von der Wärmepumpe 4 zugeleitete erhitzte Wasser erhitzt wird und über die Heizung 63, wo bei Bedarf eine zusätzliche Wärmezufuhr erfolgen kann, über den zweiten Gasleitkanal 3 in den Trocknungsbehälter 1 eingeleitet wird. Die Wärmepumpe 4 ist mit erhitztem Kühlwasser aus dem Kühlwassertank 7 gespeist und bringt dieses über einen Verdichter auf ein höheres Temperaturniveau, bevor es dem zweiten Wärmetauscher 62 zugeleitet wird.

Über den ersten Gasleitkanal 2 wird dem Kunststoffgranulat über das Gebläse 51 erwärmte Umgebungsluft zugeführt. Die Umgebungsluft wird dabei dem ersten Wärmetauscher 52 zugeführt, wo sie durch das von der Wärmepumpe 4 zugeleitete erhitzte Wasser erhitzt wird und über die Heizung 33, wo bei Bedarf eine zusätzliche Wärmezufuhr erfolgen kann, über den ersten Gasleitkanal 2 in den Trocknungsbehälter 1 eingeleitet wird. Durch diese erwärmte Umgebungsluft wird das in dem Granulat enthaltene Wasser in die Gasphase überführt. Zugleich wird dem Trocknungsgas Wärmeenergie zugeführt, wodurch dessen Wasseraufnahmekapazität wieder erhöht wird.

Die Temperatur und der Taupunkt des in dem Trocknungsbehälter befindlichen Trocknungsgases, vorliegend Trocknungsluft, wird über Sensoren des Taupunkt- und Thermosensormoduls 14, kontinuierlich erfasst und an die Steuer- und Regeleinrichtung 8 gemeldet, die anhand hinterlegter Vorgabewerte die Temperatur und den Taupunkt durch Ansteuerung des Gebläses 51 einerseits und des Expansionsventils 63 andererseits einregelt.

Durch die Anordnung mehrerer, separat mit Trocknungsgas gespeister Gasleitkanäle ist eine unterschiedliche Strömungsgeschwindigkeit und/oder Trocknungsgasmenge einstellbar, wodurch die Durchströmung des Kunststoffgranulats mit Trocknungsgas detaillierter einstellbar ist.

Wenngleich in den vorstehenden Ausführungsbeispielen durchgehend Trocknungsluft als Trocknungsgas Verwendung findet, ist die Erfindung nicht auf den Einsatz von Trocknungsluft beschränkt. Selbstverständlich ist der Einsatz sämtlicher zur Trocknung von Kunststoffgranulat geeigneter Trocknungsgase von der Erfindung umfasst, insbesondere auch der Einsatz von Inertgas wie beispielsweise Stickstoff zur Trocknung von oxidationsfreudigen Kunststoffgranulaten.

## Patentansprüche

1. Vorrichtung zur Trocknung von Kunststoffgranulat, umfassend einen Trocknungsbehälter (1), der endseitig eine Entnahmeöffnung (13) aufweist und wenigstens einen Gasleitkanal (2, 3), der mit einer Trocknungsgasquelle verbunden ist, wobei Mittel zur Erwärmung wenigstens eines Trocknungsgasstroms angeordnet sind, **dadurch gekennzeichnet, dass** die Mittel zur Erwärmung des wenigstens einen Trocknungsgases wenigstens eine Wärmepumpe (4) umfassen.

2. Vorrichtung nach Anspruch 1, **dadurch gekennzeichnet, dass** die Wärmepumpe (4) mit einem Kühlfluidreservoir (7) verbunden ist, das mit dem Kühlkreislauf wenigstens eines Spritzgießwerkzeugs (8) verbunden ist.

3. Vorrichtung nach Anspruch 1 oder 2, **dadurch gekennzeichnet, dass** die Wärmepumpe (4) mit einem Kühlfluidreservoir (7) verbunden ist, das mit dem Hydraulikkühlsystem wenigstens einer Kunststoffspritzgießmaschine (9) verbunden ist.

4. Vorrichtung nach einem der vorgenannten Ansprüche, **dadurch gekennzeichnet, dass** wenigstens eine Wärmepumpe (4) als Wasser-Luft-Wärmepumpe ausgebildet ist.

5. Vorrichtung nach einem der vorgenannten Ansprüche, **dadurch gekennzeichnet, dass** wenigstens einer Wärmepumpe (4) nachgeschaltet ein vorzugsweise elektrisches Heizelement (53, 63) angeordnet ist.

6. Vorrichtung nach einem der vorgenannten Ansprüche, **dadurch gekennzeichnet, dass** die Trocknungsgasquelle durch eine Druckgasquelle, insbesondere eine Pressluftquelle (61) gebildet ist.

7. Vorrichtung nach einem der vorgenannten Ansprüche, **dadurch gekennzeichnet, dass** an dem Trocknungsbehälter (1) wenigstens ein Sensor (14) zu Erfassung der Temperatur und/oder des Taupunkts in dem Trocknungsbehälter angeordnet ist, wobei eine Steuer- und Regeleinrichtung (15) zur Steuerung wenigstens eines Trocknungsgasvolumenstroms angeordnet ist, die mit dem wenigstens einen Sensor (14) verbunden ist.
